Europäisches Patentamt

European Patent Office

Office européen des brevets

(11) Publication number: 0 492 686 A1

## EUROPEAN PATENT APPLICATION

(21) Application number: 91203118.4

(22) Date of filing: 28.11.91

(51) Int. Cl.5: B64C 25/40

(30) Priority: 21.12.90 IT 2250890

(43) Date of publication of application:
01.07.92 Bulletin 92/27

(84) Designated Contracting States:
AT BE CH DE DK ES FR GB GR IT LI LU NL SE

(71) Applicant: Adiletta, Giovanni
Via Mattia Preti, 10
I-80127 Napoli(IT)

(72) Inventor: Adiletta, Giovanni
Via Mattia Preti, 10
I-80127 Napoli(IT)

(74) Representative: Riccardi, Sergio
Riccardi & Co. Via Macedonio Melloni, 32
I-20129 Milano(IT)

(54) System to induce wheel rotation in aircraft.

(57) Described is a device for obtaining the rotation of the wheels (2) mounted on the landing gear (4) of aircraft with the object of limiting the transient stage during the phase of first contact with the ground, constituted by a radial blading (1) applied on the external side surface of the wheel hub.

Fig. 1

EP 0 492 686 A1

The present invention refers to a system for obtaining the rotation of the wheels of the landing gear in aircraft before the ground contact stage and the device for the practical embodiment of the same system without resorting to the energetic systems already present in aircraft.

In the aeronautical field extreme care is given to the security aspect, each element of an aircraft is planned and constructed in function of pre-established values of duration and reliability.

The dynamics of an airborne aircraft are governed by a suitable combination of movements of its mobile parts, however in the take off stage, and even more so in landing, the direction and stability of the same rely only on manoeuvres of the landing gear. It is therefore essential to be sure of the integrity of the components of this landing gear and, as already mentioned, reduce the stresses where possible.

It is known that during the aircraft landing stage, in the moment in which the still wheels touch the ground at a relative velocity sometimes exceeding 300 km/h, a series of transitory phenomena develop connected to the tyre-ground friction which produces a rapid wearing of the rubber and especially risks of breaking due to overheating.

Amongst other things, a system which motorizes the wheels before contact with the ground would produce unacceptable encumbrance as well as extra weight of the aircraft with obvious economical operational damage.

The device of the present invention has the object to reduce the increased tangential forces acting on the tyres of the landing gear during landing, implementing safety by appreciably lengthening their life and therefore reducing running costs.

The present invention eliminates therefore the abovementioned difficulties and provides an aerodynamic system for inducing the rotation of the said wheels, based on the original concept of applying a suitable radial blading to the external side surface of the propeller hub and suitably diverting the air intercepted by the aircraft during the terminal phases of the flight, so obtaining a torque which sets the wheel axle into rotation.

In this way the relative ground-tyre surface velocity is nullified or at least limited in the first contact stage, in as much as the wheels of the landing gear, once lowered for the landing stage, are set into rotation in advance at a peripheral velocity near to that of the first impact with the ground.

The radial type blading can be applied to a separate plate on the pre-existing wheel hub and attached to this in such a way that the device can also be used on existing aircraft.

A suitable fairing integral to the fixed part of landing gear directs the air flow at a velocity on the blading determining the rotation of the wheel. The fairing has a form which at the same time permits the centrifugal escape rather than sticking of any debris, gravel, etc

One must also note that the application on the rotor of this blading is not a disadvantage in the take off phase, but rather is fitting given that it obviously contributes to increase the wheel rotation velocity to reach the take off velocity.

Some embodiments are shown in the attached sheets of ilustrative drawings, in which:

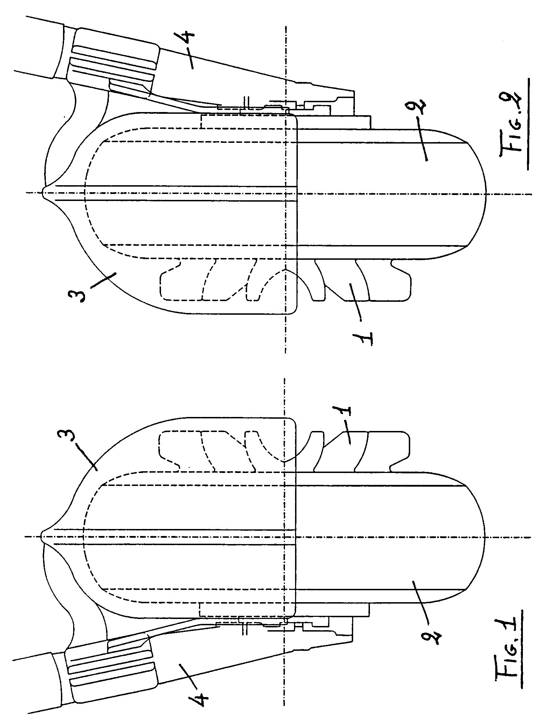

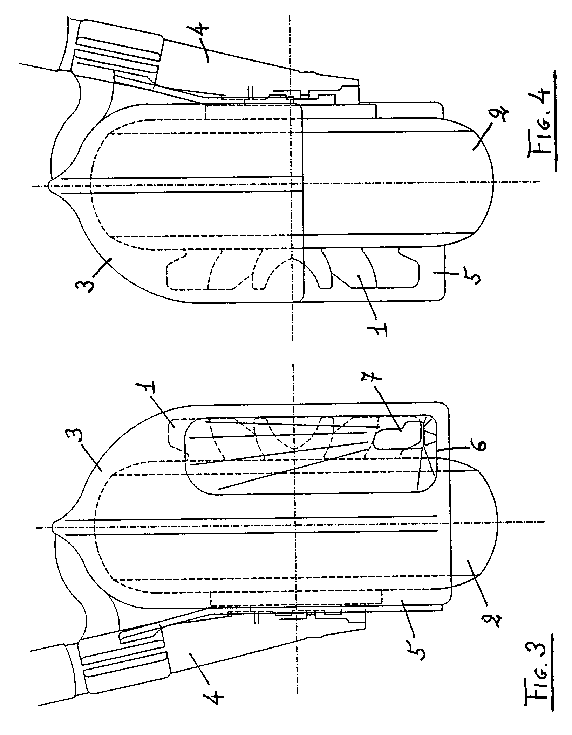

Fig. 1 is a front view and Fig. 2 is a rear view of a first embodiment of the invention; and Fig. 3 is a front view and Fig. 4 a rear view of a second embodiment of the invention.

Referring to the abovementioned figures the device is essentially constituted of a radial blade impeller 1 mounted on the wheel hub 2 and by a profiled cover 3 fixed to dampened or fixed arm 4 of the landing gear and able to divert the air flow incident on the blading increasing at the same time the velocity of the air acting on the blading.

In the embodiment in Fig. 3 and 4 the fairing has a frontal element 5 extended towards the ground, which has a large air intake mouth 6 which tapers internally to a funnel form towards the air inlet opening 7 on the blading, so creating a noteable Venturi effect and so a more marked and rapid increase in the velocity of the air incident on the blading. However at the rear the fairing is not prolonged towards the ground, which allows an easier outlet of the air and any debris carried by it.

One must also point out that system could also take on other practical forms, for example having the blading realised integral with the tyre shoe, which would so be provided with a series of blades or tabs protruding on the lateral band of the tyre.

It is necessary to note that this description is given an exemplary title and that therefore, in relation to the varies types of existing landing gear and torques to be obtained for the rotation of the wheels, a certain number of additions, modifications or changes may be made to the device, without departing from either the spirit or the object of the invention and without going out of its scope of protection, as has also been defined in the appended claims.

## Claims

1. System for inducing wheel rotation of aircraft without the application of specific motorizations, for making the landing stage easier without inconvenience, characterised by the application to or on the wheel of a radial type blading which is set into rotation by the air flow incident on it.

2. System according to Claim 1, characterised in that it comprises also a suitable fairing integral on the fixed part of the landing gear, which directs the air flow on to the blading.

3. System according to Claim 2, characterised in that the blading has an air frontal inlet which tapers to a funnel towards the entrance of the air inlet on the blading, which increases the velocity of the incident air flow.

4. System according to Claims 2 or 3, characterised in that the fairing has a form that allows the rapid expulsion of any debris carried by the air flow.

5. System according to one or more of the previous claims, characterised in that the blading is applied directly to the wheel hub or to a separate plate, fixed on said hub.

6. System according to Claim 1, characterised in that the blading is realised integral with the tyre shoe in the form of protuding tabs on the lateral band of it.

7. System for inducing the rotation of aircraft wheels, substantially as described previously and as shown in the various figures on the attached sheets of illustrative drawings, for the objects specified above.

Fig. 2

Fig. 1

Fig. 3

Fig. 4

EP 0 492 686 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-603 804 (MANHEIM)<br>* page 1, line 12 - page 1, line 15 *<br>* page 1, line 63 - page 2, line 33; figures 1-3 * | 1-3,6,7 | B64C25/40 |
| X | FR-A-2 123 158 (PAUCHET)<br>* the whole document * | 1-3,5,7 | |
| X | GB-A-1 527 880 (STERN)<br>* page 1, line 10 - page 1, line 18 *<br>* page 1, line 45 - page 1, line 90; figures 1-4 * | 1-3,5,7 | |
| X | FR-A-912 891 (WRANGELL)<br>* the whole document * | 1,2,5,7 | |
| X | US-A-4 040 582 (KRAUSS)<br>* column 1, line 5 - column 1, line 21 *<br>* column 2, line 16 - column 2, line 57; figures 1-3 * | 1,5,7 | |
| | | | **TECHNICAL FIELDS SEARCHED (Int. Cl.5)**<br><br>B64C |

The present search report has been drawn up for all claims

| Place of search | Date of completion of the search | Examiner |
|---|---|---|
| THE HAGUE | 19 MARCH 1992 | ZERI A. |

EPO FORM 1503 03.82 (P0401)